# FASCICULE DE BREVET EUROPEEN

(11) **EP 2 035 279 B1**
(45) Date de publication et mention de la délivrance du brevet: **23.12.2009**
(21) Numéro de dépôt: 07788856.8
(22) Date de dépôt: 11.06.2007
(51) Int. Cl.: B64D 27/18, B64D 29/00

(54) **NACELLE STRUCTURANTE**
STRUKTURGONDEL
STRUCTURAL NACELLE

(30) Priorité: 30.06.2006 FR 0605912
(43) Date de publication de la demande: 18.03.2009
(73) Titulaire: Aircelle, 76700 Gonfreville L'Orcher (FR)
(72) Inventeur: VAUCHEL, Guy, Bernard, F-76610 Le Havre (FR); GIBOUIN, Anne-Laure, F-31300 Toulouse (FR); FASSIER, Régis, F-31180 Lapeyrouse Fossat (FR); JORET, Jean-Philippe, F-27210 Beuzeville (FR); COLLIER, Jérôme, F-76600 Le Havre (FR); LEFORT, Guillaume, F-75012 Paris (FR); CHOUARD, Pierre-Alain, F-75018 Paris (FR)
(74) Mandataire: Jouanneau, Lionel
(86) Numéro de dépôt international: PCT/FR2007/000951
(87) Numéro de publication internationale: WO 2008/000924

(56) Documents cités:
- EP-A1- 0 155 887
- GB-A- 2 312 251
- US-B1- 6 330 985

## Description

La présente invention se rapporte à une nacelle pour turboréacteur double flux.

Un avion est propulsé par plusieurs turboréacteurs logés chacun dans une nacelle abritant également un ensemble de dispositifs d'actionnement annexes liés à son fonctionnement, tel qu'un dispositif d'inversion de poussée, et assurant diverses fonctions lorsque le turboréacteur est en fonctionnement ou à l'arrêt.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (ou une structure interne de la structure aval de la nacelle et entourant le turboréacteur) et une paroi interne de la nacelle. Les deux flux d'air sont éjectés du turboréacteur par l'arrière de la nacelle.

Chaque ensemble propulsif de l'avion est donc formé par une nacelle et un turboréacteur, et est suspendu à une structure fixe de l'avion, par exemple sous une aile ou sur le fuselage, par l'intermédiaire d'un pylône rattaché au turboréacteur dans sa partie avant et arrière par des suspensions.

Dans une telle configuration, c'est le turboréacteur qui supporte la nacelle.

Une telle architecture est soumise à de nombreux efforts externes conjugués lors de la mission de l'avion. Il s'agit entre autre d'efforts résultants de la gravité, des efforts aérodynamiques externes et internes, rafales, effets thermiques.

Ces contraintes appliquées à l'ensemble propulsif sont transmises au turboréacteur et entraînent des déformées de carters qui impactent directement le rendement des différents étages du turboréacteur. Plus particulièrement, dans le cas d'un ensemble propulsif dit en taille de guêpe, c'est-à-dire présentant une partie aval longue et relativement fine par rapport aux structures intermédiaires et d'entrée d'air, ces contraintes résultent en une déformation particulièrement préjudiciable appelée « mise en banane », la partie aval se courbant de manière importante.

Une telle « mise en banane » se traduit par une déformation de la structure externe de la nacelle formée par les différents carters successifs tandis que l'arbre d'entraînement, les aubes de la soufflante et aubes internes du turboréacteur restent rectilignes. Il s'ensuit un rapprochement des têtes d'aubes de l'arbre vers la périphérie interne des carters. La performance générale du turboréacteur s'en trouve réduite par rapport à une configuration dans laquelle les carters ne subissent pas ou très peu de déformations, car il convient alors de tenir compte de cette déformation dans la conception de la nacelle de manière à toujours ménager un jeu suffisant entre les têtes d'aubes et la périphérie des carters. Ceci résulte en une partie de l'air d'alimentation qui n'est pas compressé par les aubes car fuyant à travers ce jeu important.

Du document EP 0 155 887 on connaît pour cela une nacelle pour turboréacteur double flux comprenant une section avant d'entrée d'air, une section médiane destinée à entourer une soufflante du turboréacteur et une section arrière, ladite section arrière présentant une structure interne, destinée à servir de carter à une partie arrière du turboréacteur, et dont la structure interne possède des moyens d'accrochage aptes à permettre un rattachement de la nacelle à un pylône destiné à être lié à une structure fixe d'un avion sur au moins une partie de ladite structure interne.

Ainsi, en permettant le rattachement du pylône directement à une structure de la nacelle au lieu de le rattacher directement au turboréacteur, c'est la nacelle qui supporte le turboréacteur. De cette manière, le turboréacteur n'a pas à subir et à transmettre les déformées de la nacelle et réciproquement. Comme expliqué précédemment, il est alors possible d'optimiser le jeu existant entre les aubes de soufflante et aubes internes au turboréacteur et leurs carter respectifs afin d'améliorer la performance de l'ensemble propulsif.

De manière préférentielle, la structure interne est équipée de moyens de liaison rigide au turboréacteur, par exemple par boulonnage.

Avantageusement, la structure interne est liée à la section médiane par l'intermédiaire d'un carter entourant la soufflante.

Préférentiellement, la structure interne est liée à la section médiane de la partie aval du carter entourant la soufflante sur au moins une partie de sa périphérie par le biais d'une gorge de ce dernier.

Préférentiellement encore, la structure interne est liée à la section médiane de la partie aval du carter sur toute sa périphérie. Bien évidemment, cette fixation peut ne s'effectuer que sur une partie de la périphérie de la gorge.

Avantageusement, la gorge périphérique du carter présente un profil intérieur en V. Avantageusement encore, la structure interne est équipée d'un moyen de recentrage du turboréacteur.

De manière préférentielle, la structure interne est conçue de manière à ce que le pylône puisse s'étendre sur toute la longueur de la structure interne.

Avantageusement, le pylône est intégré à la structure interne.

La présente invention vise à proposer une amélioration d'une telle nacelle caractérisée en ce que la structure interne comprend au moins une paroi extérieure constituant une surface aérodynamique montée sur une ossature réalisé à partir de cadres radiaux répartis sur la longueur de la structure interne. Avantageusement, la paroi extérieure est avantageusement réalisée, partiellement ou en totalité, à partir d'un panneau acoustique. Ainsi, cette paroi ne remplit aucun rôle structurel, rôle assuré par l'ossature, et peut donc être allégée au maximum sans qu'il soit nécessaire de prévoir dans cette paroi des zones structurelles de forte densité. Dans le cas d'un panneau acoustique, il est ainsi possible de consacrer toute la surface du panneau à la fonction acoustique sans nécessité de prévoir des zones structurelles interdisant toute fonction acoustique.

Selon une première variante de réalisation, l'ossature n'entoure que partiellement le turboréacteur, de préférence sur au moins 180°.

Selon une deuxième variante de réalisation, l'ossature entoure totalement le turboréacteur.

Avantageusement, l'ossature de la structure interne est réalisée à partir de cadres radiaux. Avantageusement encore, les cadres radiaux sont réalisés à partir de bielles de reprise d'effort.

De manière préférentielle, au moins une partie des cadres radiaux sont réalisés d'une seule pièce.

De manière alternative ou complémentaire, au moins une partie des cadres radiaux sont réalisés à partir de plusieurs éléments liés entre eux, par exemple par boulonnage.

De manière avantageuse, l'ossature de la structure interne est réalisée à partir de cadres radiaux, répartis sur la longueur de la structure interne.

Préférentiellement, l'ossature comprend au moins un cadre radial avant et un cadre radial arrière reliés par une structure intermédiaire formant treillis.

De manière avantageuse, la structure intermédiaire est réalisée sous la forme d'un caisson.

Avantageusement, la structure intermédiaire est réalisée à partir de barres de liaison reliant au moins deux cadres radiaux entre eux.

Avantageusement encore, au moins une partie des barres de liaison sont intégrés à au moins un cadre radial.

De manière préférentielle, les barres de liaison sont creuses.

Avantageusement, les barres de liaisons sont disposées les unes par rapport aux autres de manière à former des triangles, de préférence isocèles.

De manière encore plus avantageuse, l'ossature comprend au moins un renfort longitudinal de part et d'autre d'un axe longitudinal de la structure interne.

Préférentiellement, la structure interne comprend au moins une bielle de reprise de poussée rattachée, d'une part, à au moins un point d'une partie amont de la structure interne, par exemple au niveau d'un plan médian horizontal, et d'autre part, à au moins un point d'une partie aval de la structure interne au voisinage du pylône ou éventuellement intégré à celui-ci.

La présence de telles bielles de reprise de poussée montées de manière oblique facilite la transmission d'efforts longitudinaux vers le pylône.

Avantageusement, la bielle de reprise de poussée est orientée sensiblement dans l'alignement structural du pylône.

Avantageusement encore, la bielle de reprise de poussée présente une fourche rattachée à la structure interne en au moins deux points de la partie amont de la structure, de part et d'autre du plan médian horizontal, la fourche de la bielle présentant un point de jonction situé, par exemple, au niveau d'un cadre radial de l'ossature.

De manière préférentielle, au moins une partie des éléments de l'ossature, à savoir notamment cadres radiaux, bielles de reprises d'effort, structure intermédiaire et renforts longitudinaux, sont équipés d'une protection thermique.

Selon une première variante de réalisation, l'ossature est réalisée en une pièce.

Selon une deuxième variante de réalisation, l'ossature est réalisée en deux demi-parties destinées à être assemblées sensiblement verticalement.

La présente invention se rapporte également à un aéronef, caractérisé en ce qu'il comprend au moins un ensemble propulsif comportant une nacelle selon l'invention.

La mise en oeuvre de l'invention sera mieux comprise à la l'aide de la description détaillée qui est exposée ci-dessous en regard du dessin annexé dans lequel :
La figure 1 est une représentation schématique en perspective d'une nacelle selon l'invention rattachée à un pylône par l'intermédiaire d'une structure interne entourant le turboréacteur.
La figure 2 est une vue en coupe longitudinale de la nacelle de la figure 1.
La figure 3 est une vue schématique partielle montrant l'agencement de la structure interne par rapport à un carter de la soufflante.
La figure 4 est une représentation schématique de la structure de la figure 3 avec une structure interne complète rattachée au pylône.
La figure 5 est une représentation en traits pleins de la figure 4 avec la structure interne abritant le turboréacteur.
La figure 6 est une vue en coupe transversale de la nacelle de la figure 1.
La figure 7 est une représentation schématique d'une première variante de réalisation de la structure interne.
La figure 8 est une représentation schématique d'une deuxième variante de réalisation de la structure interne.
La figure 9 est une illustration simplifiée d'un moyen de recentrage équipant la structure interne.
La figure 10 est une vue en coupe transversale d'une nacelle selon l'invention avec une structure interne équipée de moyens de recentrage du turboréacteur.
Les figures 11 et 12 sont des représentations respectivement en perspective et de côté d'un troisième mode de réalisation comprenant une structure interne courte.
Les figures 13 et 14 sont des représentations de la structure représentée aux figures 11 et 12 en situation de support d'un turboréacteur.

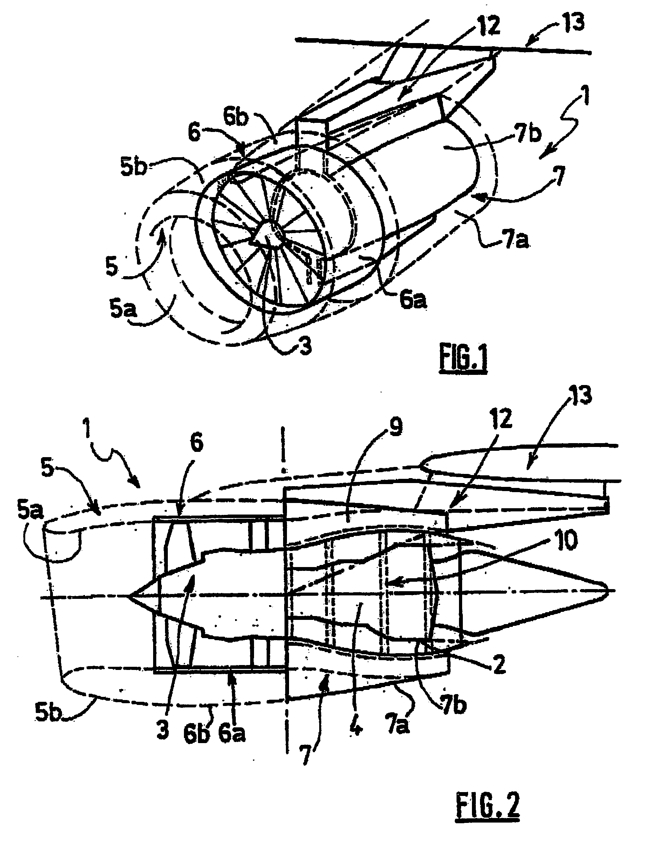

Les figures 1 et 2 représentent une nacelle 1 pour turboréacteur 2 double flux.

La nacelle 1 constitue un logement tubulaire pour un turboréacteur 2 double flux et sert à canaliser les flux d'air qu'il génère par l'intermédiaire des pâles d'une soufflante 3, à savoir un flux d'air chaud traversant une chambre de combustion 4 du turboréacteur 2, et un flux d'air froid circulant à l'extérieur du turboréacteur 2.

La nacelle 1 possède une structure comprenant une section avant formant une entrée d'air 5, une section médiane 6 entourant la soufflante 3 du turboréacteur 2, et une section arrière 7 entourant le turboréacteur 2 et comprenant un système d'inversion de poussée.

L'entrée d'air 5 présente une surface interne 5a destinée à canaliser l'air entrant et une surface externe 5b de carénage.

La section médiane 6 comprend, d'une part, un carter 6a interne entourant la soufflante 3 du turboréacteur 2, et d'autre part, une structure externe 6b de carénage du carter prolongeant la surface externe 5b de la section d'entrée d'air 5. Le carter 6a est rattaché à la section d'entrée d'air 5 qu'elle supporte et prolonge sa surface interne 5a. De plus, le carter 6a est relié à un carter amont 6c du turboréacteur 2 par l'intermédiaire de montants 8 radiaux disposés en croix. Il peut bien évidemment y avoir plus de quatre montants radiaux, notamment sur un turboréacteur de type CFM.

La section arrière 7 comprend une structure externe 7a comprenant un système d'inversion de poussée formant une tuyère d'éjection et une structure interne 7b de carénage du turboréacteur 2 définissant avec la structure externe 7a une veine 9 destinée à la circulation du flux froid.

La structure interne 7b est réalisée à partir d'une ossature structurale 10 recouverte de panneaux acoustiques 11 réalisant une surface aérodynamique intérieure de la veine 9. De ce fait, les panneaux acoustiques 11 ne sont pas structuraux et peuvent être allégés au maximum, toute la surface desdits panneaux acoustiques 11 pouvant être consacrée à la fonction acoustique sans avoir besoin de prévoir des zones structurales interdisant toute acoustique.

L'ossature structurale 10 est destinée à être rattachée directement à un mât 12 destiné lui-même à être rattaché à une partie fixe d'un avion telle qu'une aile 13.

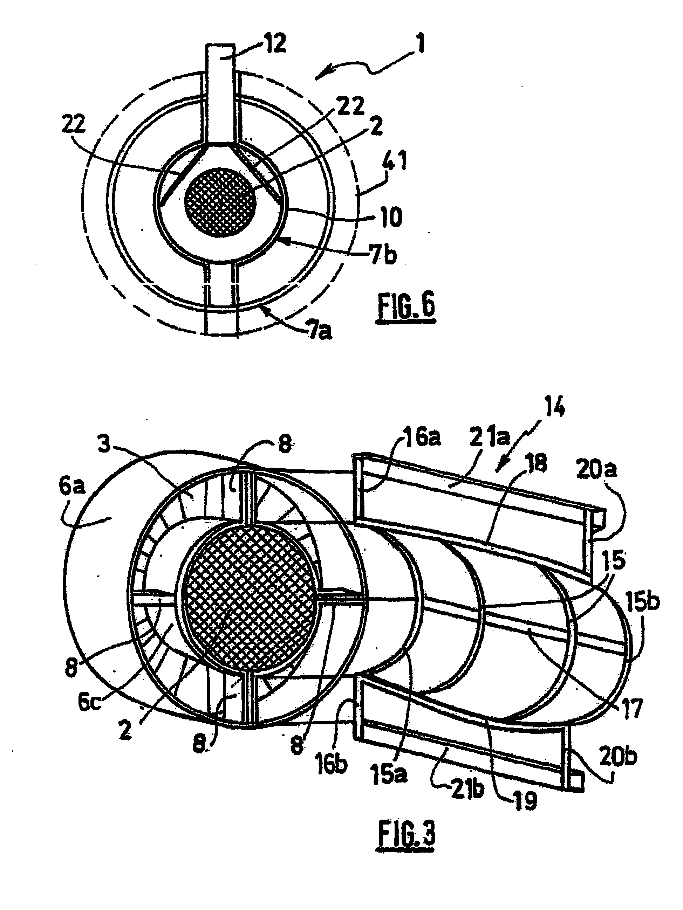

L'ossature structurale 10 est réalisée à partir de deux demi parties 14, dont l'une est représentée sur la figure 3 en perspective avec le carter 6a de la soufflante 3, destinées à être rattachées entre elle.

Chaque demi partie 14 présente une série de cadres radiaux 15 répartis sur toute la longueur de la demi partie 14 et dont le nombre et la section sont définis selon les efforts à faire transiter.

Plus précisément, chaque demi partie présente un cadre radial amont 15a associé à un montant supérieur 16a et un montant inférieur 16b qui, ensemble le cadre radial amont 15a, sont destinés à servir d'interface de raccordement entre l'ossature structural 10 et la section médiane 6 par l'intermédiaire du carter amont 6c et des montants 8 verticaux.

Les cadres radiaux 15 sont reliés entre eux par au moins un renfort longitudinal 17 ainsi que par un renfort longitudinal supérieur 18 et un renfort longitudinal inférieur 19 de jonction. Par ailleurs, la demi partie 14 présente un montant supérieur aval 20a et un montant inférieur aval 20b qui viennent compléter la demi partie 14 pour permettre une liaison structurale par un renfort supérieur 21 a et un renfort inférieur 21 b reliant respectivement les montants 16a et 20a ainsi que 16b et 20b entre eux. D'autres montants supérieurs et inférieurs peuvent être ajoutés, par exemple en continuité des cadres radiaux 15.

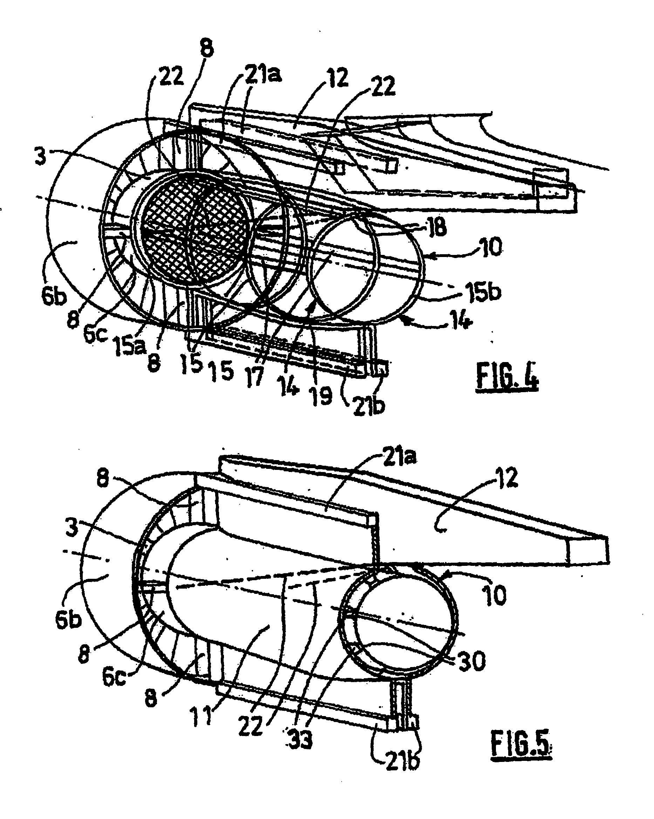

La transmission des efforts est améliorée en ajoutant sur chaque demi partie 14 une bielle 22 de reprise d'effort, telle que visible sur la figure 4, rattachée, d'une part, en amont de la demi partie 14 au niveau d'un plan médian de l'ossature structural 10, c'est-à-dire sensiblement au niveau du renfort longitudinal 17 et du cadre radial amont 15a, et d'autre part, en aval de la demi partie 14 en un point destiné à venir à proximité du mât 12, c'est-à-dire, sensiblement sur le renfort longitudinal supérieur 18 et à proximité d'un cadre radial aval 15b. Avantageusement, la bielle 22 de reprise d'effort est ainsi orientée selon une direction sensiblement identique à la direction du mât 12. Alternativement, le point d'accroche aval de la bielle 22 de reprise d'effort peut être intégré au mât 12.

Chaque demi partie 14 est liée à l'autre demi partie par sa partie inférieure, par l'intermédiaire de leurs montants inférieurs 16b amonts et montants inférieurs aval 20b, ainsi que par l'intermédiaire des renforts longitudinaux inférieurs 19 et des renforts inférieurs 21 b.

En partie supérieure, chaque demi partie 14 est liée au mât 12 par l'intermédiaire de leurs montants supérieurs 16a amonts et montants supérieurs aval 20a, ainsi que par l'intermédiaire des renforts longitudinaux supérieurs 18 et des renforts supérieurs 21 a.

Alternativement le mât peut être intégré à l'ossature structurale 10.

La figure 5 représente l'intérieur de la nacelle 1, une fois l'ossature structurale 10 recouverte par les panneaux acoustiques 11.

La figure 6 présente une vue en coupe de face de la structure interne 7b ainsi assemblée.

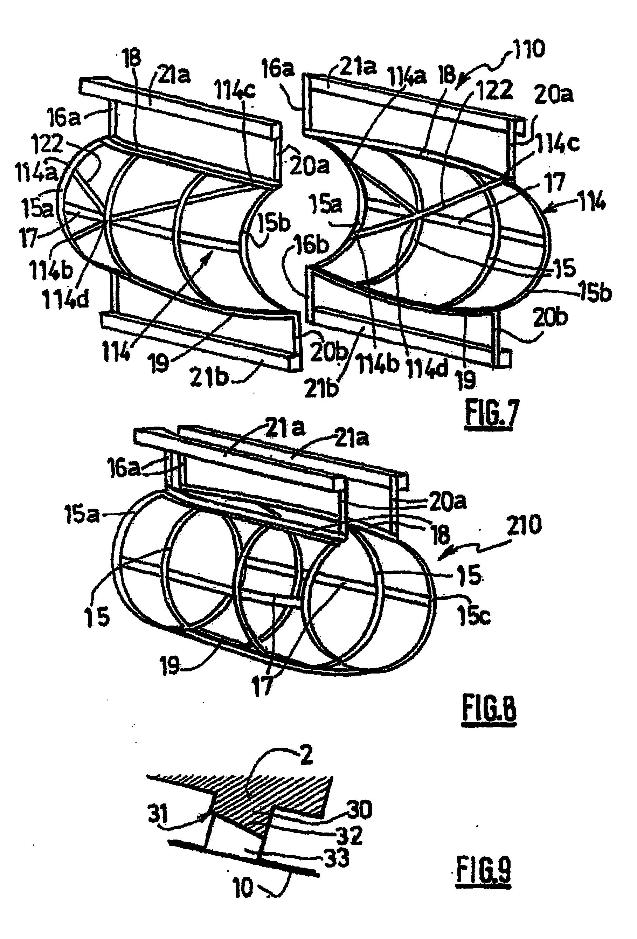

La figure 7 présente une variante de réalisation de l'ossature structurale 10. Une ossature structurale 110 selon la figure 7 est réalisée à partir de deux demi parties 114 se différenciant uniquement d'une demi partie 14 par le fait que chaque demi partie 114 comprend une bielle 122 de reprise d'effort présentant une fourche amont. Une telle bielle 122 de reprise d'effort est donc fixée à la demi partie 114 en trois point, à savoir deux points aval 114a, 114b situés au niveau du cadre radial amont 15a de part et d'autre du plan médian de l'ossature structural 100, c'est-à-dire de part et d'autre du renfort longitudinal 17, et en un point 114c situé en aval au même endroit que pour la bielle 22 de reprise d'effort. De manière préférentielle, la fourche de la bielle 122 de reprise d'effort se rejoint en un point 114d sensiblement situé au niveau d'un cadre radial 15 et y est rattaché.

La figure 8 montre une ossature structurale 210 réalisée en une seule pièce ouverte en partie supérieure uniquement, partie par laquelle elle est destinée à être rattachée au mât 12.

L'ossature structurale 10, 110, 210 est complétée par des moyens de recentrage entre le turboréacteur 2 et de la structure interne 7b situés en aval de cette dernière. Le principe de fonctionnement des moyens de recentrage est montré sur la figure 9.

Les moyens de recentrage visent à assurer un contact permanent entre le turboréacteur 2 et la structure interne 7b de manière à prendre en compte un mouvement différentiel entre ces deux structures dû à la dilation thermique du turboréacteur 2 en fonctionnement provoquant un déplacement longitudinal et axial de ce dernier.

Pour ce faire, le turboréacteur présente, en aval de sa structure, des prolongement radiaux 30 répartis sur toute sa circonférence et terminés chacun par une rampe 31 en contact glissant avec une rampe 32 complémentaire d'un prolongement radial intérieur 33 de l'ossature structural 10, 110, 210. Les rampes 31, 32 sont conçues de manière à ce que leur orientation corresponde sensiblement au différentiel de déplacement estimé entre les deux structures.

Le système de recentrage peut être réalisé de façon diverses, notamment par contact élastique, par éléments distincts ou monoblocs, sur uniquement un secteur de la périphérie du turboréacteur 2 ou sur toute sa périphérie.

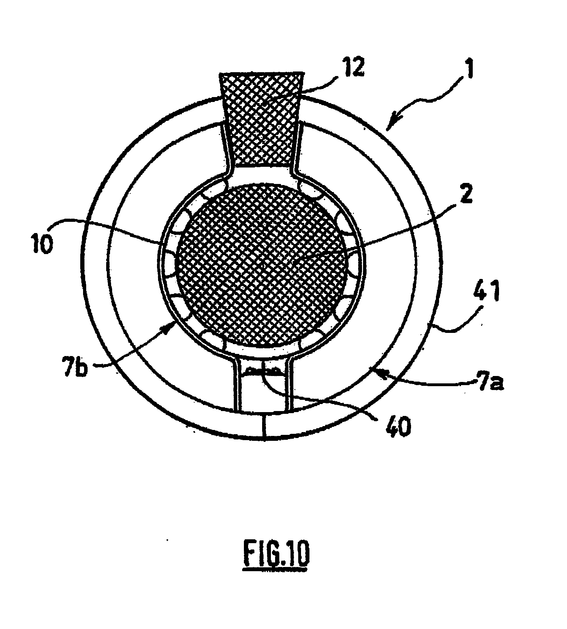

La figure 10 présente une vue en coupe de face, montrant une répartition des moyens de recentrage.

On notera également que l'invention permet une maintenance facilitée du turboréacteur 2, l'accès à ce dernier pouvant s'effectuer par simple dépose des panneaux acoustiques 11 sans nécessité le démontage de toute la structure interne 7b.

On notera également que la structure interne 7b peut éventuellement comporter une structure inférieure permettant l'accrochage d'une structure externe arrière 41 en partie inférieure. Dans ce cas, il en résulte une distance entre le point d'attache de ladite structure externe arrière 41 et la zone circonférentielle de recentrage de l'aval du turboréacteur 2. Cette distance procure une composante d'effort qui tend à écarter la structure inférieure de la structure interne 7b par laquelle la structure externe arrière 41 est rattachée qui ne permet plus au moyens de recentrage de remplir leur fonction dans cette zone. De ce fait, on pourra assurer l'intégrité du maintien du recentrage par un système de verrous 40 au niveau de la jonction entre les deux demi parties 14, 114 au niveau des cadres radiaux aval 15b.

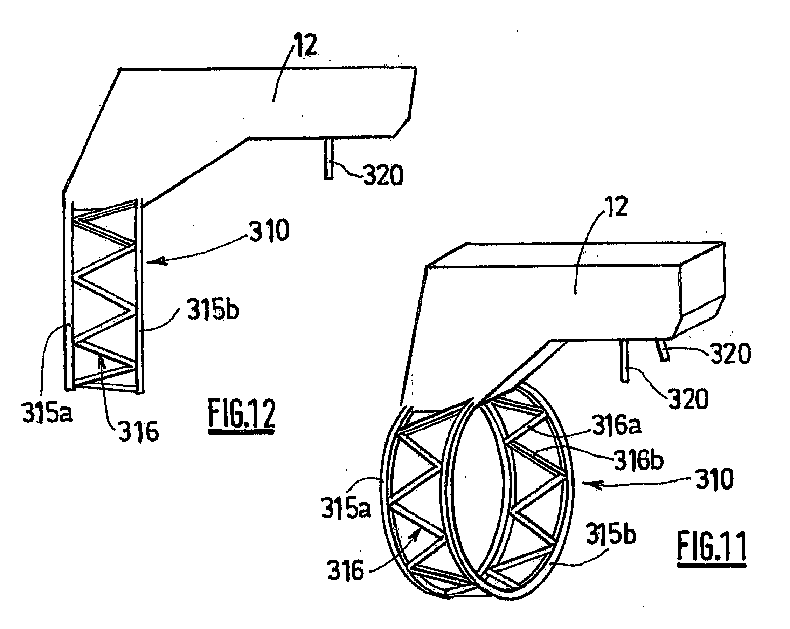

Les figures 11 à 14 montrent une variante particulière de réalisation de l'invention comprenant une structure interne 310 courte maintenue également au niveau d'un carter de la soufflante.

Le système de support seul est représenté sur les figures 11 et 12.

Celui-ci comprend des moyens d'attache de type pylône 12 sur laquelle est liée la structure interne 310.

La structure interne 310 se présente sous la forme d'une ossature structurale périphérique réalisée à partir d'un cadre radial périphérique avant 315a et d'un cadre radial périphérique arrière 315b.

Le cadre radial avant 315a et le cadre radial arrière 315b sont reliés entre eux par une structure intermédiaire 316 formant treillis réalisés à partir de barres de liaisons 316a, 316b formant ensemble des triangles sensiblement isocèles.

L'ensemble de support est complété par des suspensions 320 montées sur la structure de type pylône 12 et destinées à être reliées à proximité d'une extrémité du turboréacteur 2.

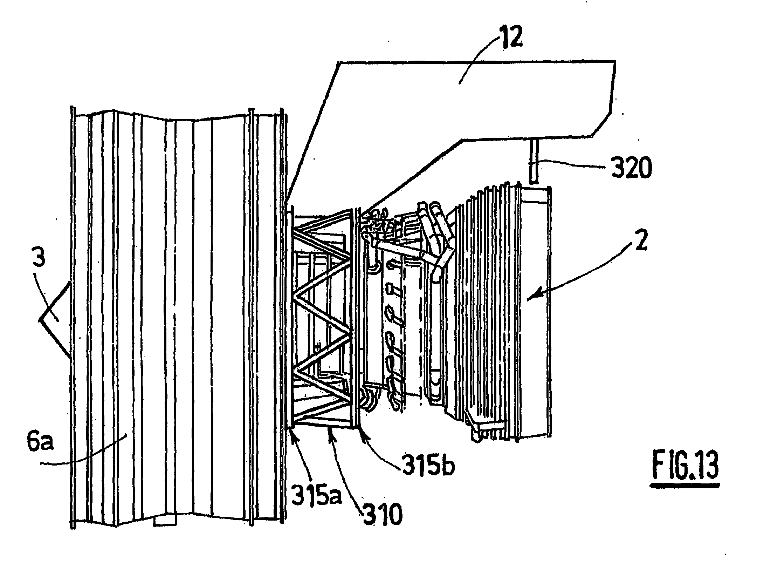

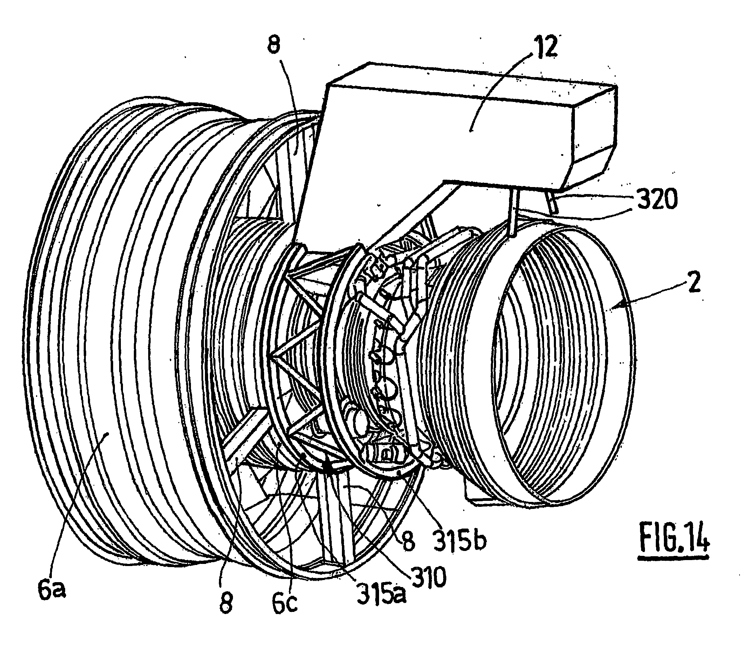

Les figures 13 et 14 montrent l'ensemble support précédemment décrit en situation de support d'un turboréacteur 2, l'ossature 310 étant liée au carte 6c au moyen d'un système de boulonnage par l'intermédiaire du cadre radial avant 315a installé dans une gorge périphérique en V du carter 6c.

Bien évidemment, comme mentionné précédemment, la structure interne pourra en variante être réalisée sous la forme d'un ou plusieurs secteurs non entièrement périphériques.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) pour turboréacteur (2) double flux comprenant une section avant (5) d'entrée d'air, une section médiane (6) destinée à entourer une soufflante (3) du turboréacteur et une section arrière (7), ladite section arrière présentant une structure interne (7b) destinée à servir de carter à une partie arrière du turboréacteur et possédant des moyens d'accrochage aptes à permettre un rattachement de la nacelle à un pylône (12) destiné à être lié à une structure fixe (13) d'un avion sur au moins une partie de ladite structure interne, **caractérisée en ce que** la structure interne (7b) comprend au moins une paroi extérieure (11) constituant une surface aérodynamique montée sur une ossature (10, 110, 210) réalisée à partir de cadres radiaux (15a, 15b, 15) répartis sur la longueur de la structure interne.

2. Nacelle (1) selon la revendication 1, **caractérisée en ce que** l'ossature n'entoure que partiellement le turboréacteur, de préférence sur au moins 180°.

3. Nacelle (1) selon la revendication 2, **caractérisée en ce que** l'ossature entoure totalement le turboréacteur.

4. Nacelle (1) selon l'une quelconque des revendications 1 à 3, **caractérisée en ce que** la paroi extérieure est réalisée, partiellement ou en totalité, à partir d'au moins un panneau acoustique (11).

5. Nacelle (1) selon l'une quelconque des revendications 1 à 4 , **caractérisée en ce que** les cadres radiaux sont réalisés à partir de bielles de reprise d'effort.

6. Nacelle (1) selon l'une quelconque des revendications 1 à 5, **caractérisée en ce que** au moins une partie des cadres radiaux sont réalisés d'une seule pièce.

7. Nacelle (1) selon l'une quelconque des revendications 1 à 6, **caractérisée en ce qu'**au moins une partie des cadres radiaux sont réalisés à partir de plusieurs éléments liés entre eux, par exemple par boulonnage.

8. Nacelle (1) selon l'une quelconque des revendications 1 à 7, **caractérisée en ce que** l'ossature comprend au moins un cadre radial avant et un cadre radial arrière reliés par une structure intermédiaire formant treillis.

9. Nacelle (1) selon la revendication 8, **caractérisée en ce que** la structure intermédiaire est réalisée sous la forme d'un caisson.

10. Nacelle (1) selon la revendication 8, **caractérisée en ce que** la structure intermédiaire est réalisée à partir de barres de liaison reliant au moins deux cadres radiaux entre eux.

11. Nacelle (1) selon la revendication 10, **caractérisée en ce qu'**au moins une partie des barres de liaison sont intégrés à au moins un cadre radial.

12. Nacelle (1) selon l'une quelconque des revendications 10 ou 11, **caractérisée en ce que** les barres de liaison sont creuses.

13. Nacelle (1) selon l'une quelconque des revendications 10 à 12, **caractérisée en ce que** les barres de liaisons sont disposées les unes par rapport aux autres de manière à former des triangles, de préférence isocèles.

14. Nacelle (1) selon l'une quelconque des revendications 1 à 13 **caractérisée en ce que** l'ossature (10, 110, 210) comprend au moins un renfort longitudinal (17, 20a, 20b) de part et d'autre d'un axe longitudinal de la structure interne.

15. Nacelle (1) selon l'une quelconque des revendications 1 à 14, **caractérisée en ce que** la structure interne (7b) comprend au moins une bielle (22, 122) de reprise de poussée rattachée, d'une part, à au moins un point d'une partie amont de la structure interne (114a, 114b), par exemple au niveau d'un plan médian horizontal, et d'autre part, en au moins un point (114c) d'une partie aval de la structure interne au voisinage du pylône (12) ou éventuellement intégré à celui-ci.

16. Nacelle (1) selon la revendication 15, **caractérisée en ce que** la bielle (22, 122) de reprise de poussée est orientée sensiblement dans l'alignement structural du pylône (12).

17. Nacelle (1) selon l'une quelconque des revendications 15 ou 16, **caractérisée en ce que** la bielle (122) de reprise de poussée présente une fourche rattachée à la structure interne (7b) en au moins deux points (114a, 114b) de la partie amont de la structure interne, de part et d'autre du plan médian horizontal, la fourche de la bielle présentant un point de jonction (114d) situé, par exemple, au niveau d'un cadre radial (15) de l'ossature (110).

18. Nacelle (1) selon l'une quelconque des revendications 1 à 17, **caractérisée en ce qu'**au moins une partie des éléments de l'ossature, à savoir notamment cadres radiaux, bielles de reprises d'effort, structure intermédiaire et renforts longitudinaux, sont équipés d'une protection thermique.

19. Nacelle (1) selon l'une quelconque des revendications 1 à 18, **caractérisée en ce que** la structure interne (7b) possède une ossature (210) en une pièce.

20. Nacelle (1) selon l'une quelconque des revendications 1 à 18, **caractérisé en ce que** la structure interne (7b) possède une ossature (10, 110) en deux pièces destinées à être assemblées sensiblement verticalement.

21. Ensemble propulsif, **caractérisé en ce qu'**il comprend une nacelle (1) selon l'une quelconque des revendications 1 à 20, ladite nacelle abritant un turboréacteur (2).

22. Aéronef, **caractérisé en ce qu'**il comprend au moins un ensemble propulsif selon la revendication 21.

## Claims

1. A nacelle (1) for a turbofan (2) comprising a front air intake section (5), a mid-section (6) designed to surround a fan (3) of the turbojet and a rear section (7), said rear section having an internal structure (7b) designed to serve as a casing to a rear portion of the turbojet, the internal structure having coupling means suitable for allowing an attachment of the nacelle to a pylon (12) intended to be connected to a fixed structure (13) of an aircraft on at least one portion of said internal structure, **characterized in that** the internal structure (7b) comprises at least one external wall forming an aerodynamic surface mounted on a framework (10, 110, 210) made from radial frames (15a, 15b, 15) distributed over the length of the internal structure.

2. The nacelle (1) as claimed in claim 1, **characterized in that** the framework only partially surrounds the turbojet, preferably over at least 180°.

3. The nacelle (1) as claimed in claim 2, **characterized in that** the framework totally surrounds the turbojet.

4. The nacelle (1) as claimed in any one of claims 1 to 3, **characterized in that** the external wall is partially or totally made from at least one acoustic panel (11).

5. The nacelle (1) as claimed in any one of claims 1 to 4, **characterized in that** the radial frames are made from force-absorbing link rods.

6. The nacelle (1) as claimed in any one of claims 1 or 5, **characterized in that** at least a portion of the radial frames are made in a single piece.

7. The nacelle (1) as claimed in any one of claims 1 to 6, **characterized in that** at least a portion of the radial frames are made from several elements linked together, for example by bolting.

8. The nacelle (1) as claimed in any one of claims 1 to 7, **characterized in that** the framework comprises at least one front radial frame and one rear radial frame connected by an intermediate structure forming a mesh.

9. The nacelle (1) as claimed in claim 8, **characterized in that** the intermediate structure is made in the form of a caisson.

10. The nacelle (1) as claimed in claim 8, **characterized in that** the intermediate structure is made from link bars connecting at least two radial frames together.

11. The nacelle (1) as claimed in claim 10, **characterized in that** at least a portion of the link bars are incorporated into at least one radial frame.

12. The nacelle (1) as claimed in either one of claims 10 or 11, **characterized in that** the link bars are hollow.

13. The nacelle (1) as claimed in any one of claims 10 to 12, **characterized in that** the link bars are placed relative to one another so as to form triangles, preferably isosceles triangles.

14. The nacelle (1) as claimed in any one of claims 1 to 13, **characterized in that** the framework (10, 110, 210) comprises at least one longitudinal reinforcement (17, 20a, 20b) on either side of a longitudinal axis of the internal structure.

15. The nacelle (1) as claimed in any one of claims 1 to 14, **characterized in that** the internal structure (7b) comprises at least one link rod (22, 122) for absorbing thrust attached, on the one hand, to at least one point of an upstream portion of the internal structure (114a, 114b), for example at a horizontal mid-plane, and, on the other hand, at at least one point (114c) of a downstream portion of the internal structure in the vicinity of the pylon (12) or optionally incorporated into the latter.

16. The nacelle (1) as claimed in claim 15, **characterized in that** the link rod (22, 122) for absorbing thrust is oriented substantially in the structural alignment of the pylon (12).

17. The nacelle (1) as claimed in any one of claims 15 or 16, **characterized in that** the link rod (122) for absorbing thrust has a fork attached to the internal structure (7b) at at least two points (114a, 114b) of the upstream portion of the internal structure, on either side of the horizontal mid-plane, the fork of the link rod having a junction point (114d) situated, for example, at a radial frame (15) of the framework (110).

18. The nacelle (1) as claimed in any one of claims 1 to 17, **characterized in that** at least one portion of the framework elements, namely in particular the radial frames, force-absorbing link rods, intermediate structure and longitudinal reinforcements, are fitted with a heat protection.

19. The nacelle (1) as claimed in any one of claims 1 to 18, **characterized in that** the internal structure (7b) has a one-piece framework (210).

20. The nacelle (1) as claimed in any one of claims 1 to 18, **characterized in that** the internal structure (7b) has a two-piece framework (10, 110) designed to be assembled substantially vertically.

21. A propulsion system, **characterized in that** it comprises a nacelle (1) as claimed in any one of claims 1 to 20, said nacelle accommodating a turbojet (2).

22. An aircraft, **characterized in that** it comprises at least one propulsion system as claimed in claim 21.

## Patentansprüche

1. Gondel (1) für ein Zweistrom-Turbostrahltriebwerk (2), die einen vorderen Lufteinlassabschnitt (5), einen mittleren Abschnitt (6), der dazu bestimmt ist, ein Gebläse (3) des Turbostrahltriebwerks zu umgeben, und einen hinteren Abschnitt (7) aufweist, wobei der hintere Abschnitt eine Innenstruktur (7b) aufweist, die dazu bestimmt ist, für einen hinteren Teil des Turbostrahltriebwerks als Gehäuse zu dienen und Befestigungseinrichtungen besitzt, die eine Verbindung der Gondel mit einem Außenlastträger (12) ermöglichen können, der dazu bestimmt ist, mit einer ortsfesten Struktur (13) eines Flugzeugs über mindestens einen Teil der Innenstruktur verbunden zu werden, **dadurch gekennzeichnet, dass** die Innenstruktur (7b) mindestens eine eine aerodynamische Fläche bildende Außenwand (11) enthält, die auf ein Gerippe (10, 110, 210) montiert ist, das ausgehend von radialen Rahmen (15a, 15b, 15) hergestellt wird, die über die Länge der Innenstruktur verteilt sind.

2. Gondel (1) nach Anspruch 1, **dadurch gekennzeichnet, dass** das Gerippe das Turbostrahltriebwerk nur teilweise umgibt, vorzugsweise über mindestens 180°.

3. Gondel (1) nach Anspruch 2, **dadurch gekennzeichnet, dass** das Gerippe das Turbostrahltriebwerk vollständig umgibt.

4. Gondel (1) nach einem der Ansprüche 1 bis 3, **dadurch gekennzeichnet, dass** die Außenwand teilweise oder vollständig ausgehend von mindestens einer Akustikplatte (11) hergestellt wird.

5. Gondel (1) nach einem der Ansprüche 1 bis 4, **dadurch gekennzeichnet, dass** die radialen Rahmen ausgehend von Kraftaufnahmestangen hergestellt werden.

6. Gondel (1) nach einem der Ansprüche 1 bis 5, **dadurch gekennzeichnet, dass** mindestens ein Teil der radialen Rahmen aus einem Stück hergestellt wird.

7. Gondel (1) nach einem der Ansprüche 1 bis 6, **dadurch gekennzeichnet, dass** mindestens ein Teil der radialen Rahmen ausgehend von mehreren zum Beispiel durch Verschraubung miteinander verbundenen Elementen hergestellt wird.

8. Gondel (1) nach einem der Ansprüche 1 bis 7, **dadurch gekennzeichnet, dass** das Gerippe mindestens einen vorderen radialen Rahmen und einen hinteren radialen Rahmen enthält, die durch eine ein Gitter bildende Zwischenstruktur verbunden sind.

9. Gondel (1) nach Anspruch 8, **dadurch gekennzeichnet, dass** die Zwischenstruktur in Form eines Kastens hergestellt wird.

10. Gondel (1) nach Anspruch 8, **dadurch gekennzeichnet, dass** die Zwischenstruktur ausgehend von Verbindungsstäben hergestellt wird, die mindestens zwei radiale Rahmen miteinander verbinden.

11. Gondel (1) nach Anspruch 10, **dadurch gekennzeichnet, dass** mindestens ein Teil der Verbindungsstäbe in mindestens einen radialen Rahmen integriert ist.

12. Gondel (1) nach einem der Ansprüche 10 oder 11, **dadurch gekennzeichnet, dass** die Verbindungsstangen hohl sind.

13. Gondel (1) nach einem der Ansprüche 10 bis 12, **dadurch gekennzeichnet, dass** die Verbindungsstangen so zueinander angeordnet sind, dass sie vorzugsweise gleichschenklige Dreiecke bilden.

14. Gondel (1) nach einem der Ansprüche 1 bis 13, **dadurch gekennzeichnet, dass** das Gerippe (10, 110, 210) mindestens eine Längsverstärkung (17, 20a, 20b) zu beiden Seiten einer Längsachse der Innenstruktur enthält.

15. Gondel (1) nach einem der Ansprüche 1 bis 14, **dadurch gekennzeichnet, dass** die Innenstruktur (7b) mindestens eine Schubaufnahmestange (22, 122) aufweist, die einerseits mit mindestens einem Punkt eines vorderen Teils der Innenstruktur (114a, 114b), zum Beispiel in Höhe einer waagrechten Mittelebene, und andererseits mit mindestens einem Punkt (114c) eines hinteren Teils der Innenstruktur in der Nähe des Außenlastträgers (12) verbunden oder ggf. in diesen integriert ist.

16. Gondel (1) nach Anspruch 15, **dadurch gekennzeichnet, dass** die Schubaufnahmestange (22, 122) im Wesentlichen in struktureller Flucht mit dem Außenlastträger (12) ausgerichtet ist.

17. Gondel (1) nach einem der Ansprüche 15 oder 16, **dadurch gekennzeichnet, dass** die Schubaufnahmestange (122) eine Gabel aufweist, die mit der Innenstruktur (7b) an mindestens zwei Punkten (114a, 114b) des vorderen Teils der Innenstruktur zu beiden Seiten der waagrechten Mittelebene verbunden ist, wobei die Gabel der Stange einen Verbindungspunkt (114d) aufweist, der sich zum Beispiel in Höhe eines radialen Rahmens (15) des Gerippes (110) befindet.

18. Gondel (1) nach einem der Ansprüche 1 bis 17, **dadurch gekennzeichnet, dass** mindestens ein Teil der Elemente des Gerippes, nämlich insbesondere radiale Rahmen, Kraftaufnahmestangen, Zwischenstruktur und Längsverstärkungen, mit einem Wärmeschutz versehen ist.

19. Gondel (1) nach einem der Ansprüche 1 bis 18, **dadurch gekennzeichnet, dass** die Innenstruktur (7b) ein einstückiges Gerippe (210) besitzt.

20. Gondel (1) nach einem der Ansprüche 1 bis 18, **dadurch gekennzeichnet, dass** die Innenstruktur (7b) ein Gerippe (10, 110) aus zwei Bauteilen besitzt, die dazu bestimmt sind, im Wesentlichen senkrecht zusammengebaut zu werden.

21. Antriebseinheit, **dadurch gekennzeichnet, dass** sie eine Gondel (1) nach einem der Ansprüche 1 bis 20 aufweist, wobei die Gondel ein Turbostrahltriebwerk (2) aufnimmt.

22. Luftfahrzeug, **dadurch gekennzeichnet, dass** es mindestens eine Antriebseinheit nach Anspruch 21 aufweist.
